# EUROPEAN PATENT SPECIFICATION

(11) **EP 1 894 774 B1**
(45) Date of publication and mention of the grant of the patent: **15.12.2010**
(21) Application number: 06119987.3
(22) Date of filing: 01.09.2006
(51) Int. Cl.: B60P 7/08

(54) **Load securing system and method for installing such system**
Ladungssicherungssystem und entsprechendes Einbauverfahren
Système de fixation de charge et méthode d'installation correspondante

(43) Date of publication of application: 05.03.2008
(73) Proprietor: Modul-System HH AB, 431 22 Mölndal (SE)
(72) Inventor: Carlsson, Anders, SE-422 50, Hisings Backa (SE); Axelsson, Torbjörn, SE-434 96, Kungsbacka (SE)
(74) Representative: Vink, Charlotta

(56) References cited:
- US-A- 3 159 111
- US-B1- 6 270 137

## Description

### Technical field

The present invention relates to a load securing system, for a cargo or a back space in an automotive vehicle, according to the preamble of claim 1. Furthermore, the present invention is related to a method of installing such a system, according to claim 17.

Such a system and its corresponding method are known from US 3159111 A.

### Background of the invention

It is common practise in the art of service vehicles to equip a cargo space or a back space of an automotive vehicle with for example cupboards, tool holders, shelves or other module units. This is usually made in a separate step after the vehicle have been manufactured, i.e. the equipping of the vehicle in question is made separately from the manufacturing. Before the vehicle is equipped with specialised equipment, usually the cargo space of the vehicle is provided with an inner floor, usually made of wood, but the floor might also be made of for example an artificial, plastic material. This floor functions as a good support to work, stand and walk upon and is also used as an anchor plate for the module unit.

The module system is often also at least partly attached to the wall and the purpose is to counteract that the unit tip for example in a turn. It is common practise to secure the module unit/units to the wall with two fasteners, with screws or the like penetrating said vehicle wall, one fastener being positioned on the first side portion of the module unit and one fastener on the other side portion of same module unit. However, there is a risk during acceleration or retardation of the vehicle, that the module system, or maybe one module unit thereof, can break away which may cause damages. The module units, in particular when they are equipped with tools and material which are included in a toolkit, are usually rather heavy and may in such case present a potential safety risk. During retardation of the vehicle the module system may, if not securely attached, move forward with a large force and which in a serious scenario may break through into the driver cabin and thereby even cause personal injuries. Therefore, an improved arrangement for safe fastening of the module unit is needed.

WO2006057596, of the present applicant, discloses a fastening device for working equipment in a vehicle, which comprises a fastenings device further comprising a floor bracket plate, provided with fixation points.

One issue related to securing the module units to the wall of the vehicle is that it is not that flexible when it comes to changing/moving the module units. In addition it is often considered a problem that such installations leave open holes where the module system has been attached to the vehicle.

The ever increasing demand on flexible and quick installation of module systems calls for a new solution. Usually, the customer wants to change the working equipment, depending on what kind of work he/she has to do. So instead of replacing equipment one by one, it is desirable that a whole module unit or entire module system could be changed, which saves time and the customer will always know that he/she has the right equipment with him.

Hence, it is still an issue to present an improved module system which is quickly installed, safe and yet flexible in order to enable securing various sizes and different shapes of module units. Moreover, it is desirable that such system when removed does not leave permanent damage, such as holes, in the vehicle.

### Summary of the invention

In view of the above, an objective of the invention as defined in the claim 1 is to solve or at least reduce the problems discussed above.

An arrangement according to the module system will thus increase the ability to retain the module units even at great stress forces and at the same time increase the flexibility of arranging different kind of module units in an automotive vehicle in an easy and fast way and without the need of making holes for screws or other fasteners. Usually, a row of module units, is formed by placing modules next to one another in the longitudinal direction of the vehicle and they are then fixed to the floor and the wall with respective two fastening devices. The solution will spread out the forces, in case of any impact, through fastening zones over the whole row of module units or e.g. one large unit instead of just one point at each side portions.
Advantageously, said rails are propagating parallel to one another along the longitudinal direction of the vehicle.
Preferably, at least one module system, containing for example work equipment, is placed along the longitudinal direction of the vehicle and attached to one rail. Suitably, at a first side portion of the module system a first fastener is arranged and at a second side portion of said module system a second fastener is arranged, said fasteners arranging the module system to the wall of the vehicle. Alternatively, a wall rail is positioned by said wall along the longitudinal direction of the vehicle and comprises fastening zones for the module system, said rail being formed for variable positioning of at least three fasteners for distribution of module system loading along said rail.
At least one additional fastening zone is positioned between a first and a second fastening zone of the side portions of the module system. Preferably, at least one of the rails is made of metal.
Preferably, at least one of the rail has at least one undercut profile. Suitably, at least one of the rails has three rail sections. Furthermore, at least one of the rails is advantageously adapted for tongue and groove engagement with said bridging element along a first groove. According to a currently preferred solution at least one of the rails is adapted for tongue and groove engagement with said bridging element along a first and a second groove.
It is realized that the bridging element is formed by at least one floor element . Preferably, a plurality of floor elements forms the bridging element. The upper side of the bridging element and the upper side of the rail are levelled once mounted.
Suitably, the bridging element (33) is made of wood. It is also an option to use a composite material. However, it is realized that the claimed invention is not limited to the use of a particular material.
Advantageously, the bridging element is provided with a mat on the upper side. This presents a further way of adapting the material to provide appropriate working conditions.
According to a second aspect of the invention it is accomplished a method of installing a load securing system in service vehicles comprising the steps of, connecting a bridging element with a rail on two sides of said bridging element, placing bridging element and rails in a cargo space floor of said vehicle and arranging said rails through fasteners to the vehicle at a side of each rail facing away from said bridging element, thereby fixing said load securing system in the service vehicle.
Furthermore, according to the invention floor levelling sections are positioned on vehicle floor spaces in the cargo space, in order to achieve a levelled surface throughout the entire cargo floor level.
Advantageously, the method according to the invention a module system is positioned anchored to said rail of the load securing system. Preferably, a module system is fixed to an additional rail previously mounted on the wall of the service vehicle.
Typically, module systems comprise module units of various types. It is realized that module units may encompass many types of cupboards, tool holders, shelves, rack systems or other module units.
The module system is furthermore based on that a rail is arranged to the wall along the longitudinal direction of the vehicle and the rail has fastening zones on which fasteners can be arranged. In this way the stress forces can be spread from being rather at two points to be distributed over the entire rail.
The rail which is fixated on the wall is preferably made of metal and is preferably formed from a metal sheet or through extrusion. The rail has at least one undercut channel which comprise the fastening zone for the module unit, wherein holes with a defined diameter and at a defined distance are arranged. These holes give the possibility to screw the rail to the wall, the rail can also be fastened with a double-stick tape.
Preferably, one additional fastening zone is arranged between a first and a second fastening zone of the side portions of the module unit. The possibility to perform easy installation together and yet providing improved fastening has been an issue during long time and hence the stepless manoeuvrability of the fasteners, which at the same time may easily attached to said module units provides for improved safety.
Advantageously, the wall rail has at least one undercut channel for enabling the stepless manoeuvrability. More preferably, the wall rail has three undercut channels.
Suitably, the fastening zones comprise a fastener, which is arranged to the wall rail, preferably through joint connection elements. The rail is adapted for complementary engagement with a fastener. According to a preferred embodiment the fastener is of quick-fastening type.

Furthermore, according to a preferred embodiment of the invention the fastener is a bracket with at least a part propagating in a perpendicular direction in relation to said rail.
Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. Other objectives, features and advantages of the present invention will appear from the following detailed disclosure, from the attached dependent claims as well as from the drawings.

### Brief description of the drawings

Currently preferred exemplary embodiments of the present invention will now be described in more detail with reference to the accompanying drawings, wherein:
Fig. 1 discloses an open-up perspective view of a service vehicle comprising a load securing system according to the invention.
Fig. 2 discloses an enlarged partial perspective view of the cut out II in fig. 1
Fig. 3. discloses an enlarged partial perspective view of the cut out III in fig. 1
Fig. 4a discloses a rail according to a first embodiment.
Fig. 4b discloses a rail according to a second embodiment.
Fig. 5 discloses an enlarged partial perspective view of the cut-out V in fig. 1 (without module units)
Fig. 6 disclosure a module system according to a third aspect of the invention as seen in perspective from behind.

### Detailed description of preferred embodiments

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:

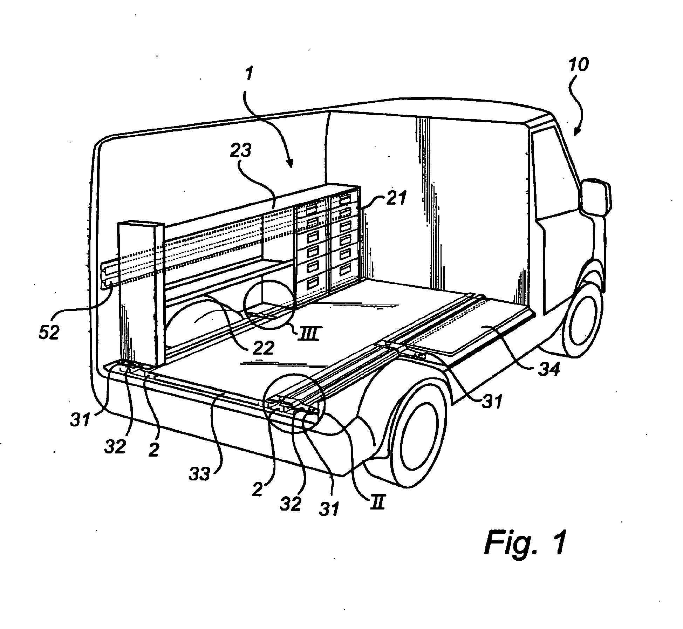

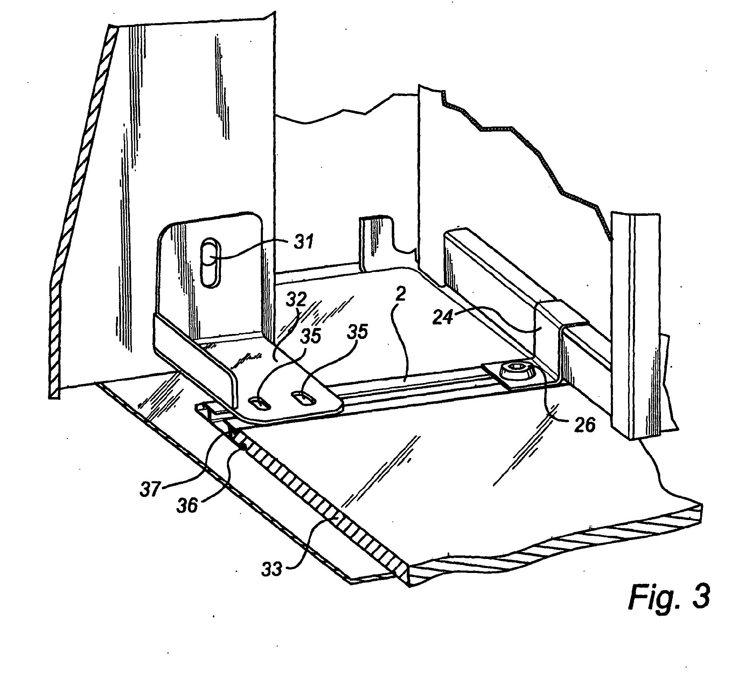

Fig. 1 shows a module system 1 for a cargo or a back space in a automotive vehicle, for example a service vehicle 10. Module units 20, which can be a drawer unit 23 containing for example drawers 21 or shelves 22, are placed and fixated (more clearly shown in Fig. 3) on an already installed inner floor construction. The floor construction contains a floor section 33 with a rail 2 arranged on two opposite sides of the floor section 33. The floor section 33 is fixed to the rails 2. The rails are fixed to the service vehicle by fixing means 32 to the ring fasteners 31. This arrangement provides for that the inner floor construction can be arranged to the ordinary floor without being damaged through holes or other interferences. A rail 52 is positioned along the longitudinal direction of the vehicle. Advantageously, it has the same shape as the rail 2, which is arranged in the floor construction. As the floor construction preferable is used in the middle section of the vehicle (in between the rails) can a levelling section 34 for the free spaces be arranged on the rail 2.

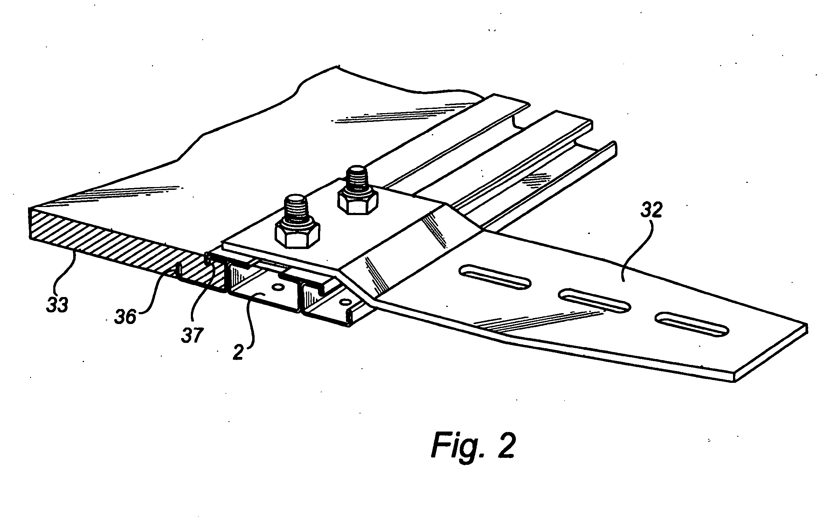

Fig 2. shows a section of a preferred floor construction in detail in a perspective view. The floor section 33 shows a first groove 36 and a second groove 37. The rail 2 and floor section 33 with its grooves 36, 37 is so designed that they match into each other. On the rail 2 a fixing means 32 is arranged, which is used to fixate the floor construction to the vehicle. The fixing means 32 can have other designs, besides what is shown in the preferred embodiments.
Fig. 3 shows another section of a preferred floor construction as described in Fig. 2 with a different kind of fixing means. The fixing means 32 has two fixing element holes 35 through which said fixing means can be fixated to the rail 2 and it also shows a hole through which the whole floor construction may be fixed to the ring fastener in the vehicle. It also shows a fastening bracket 2 which arrange the module unit through a rail fastening means 26 to the rail 2.

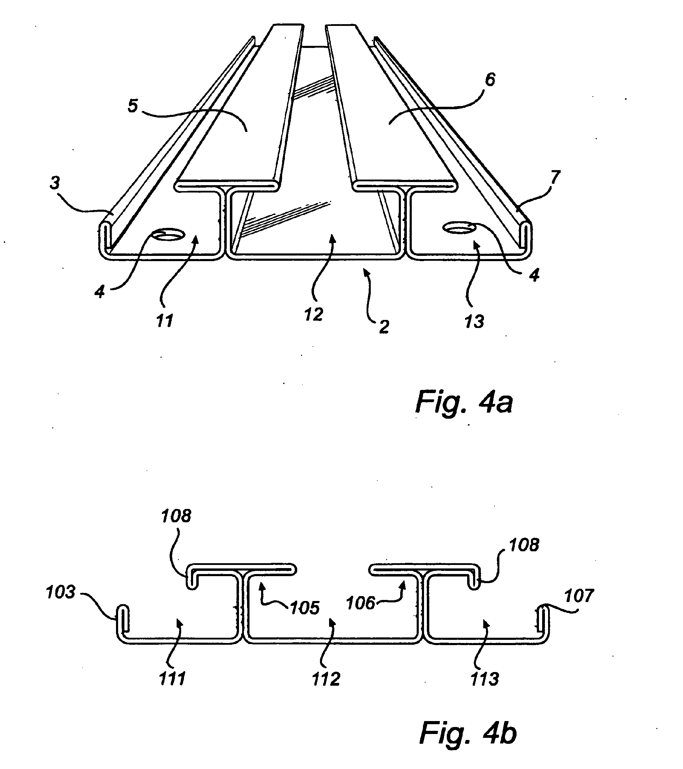

Fig. 4a shows the rail 2 in a perspective way with one kind of profile. This profile is made out of a sheet metal by e.g. roll forming but can also be an extruded profile. The rail 2 contains out of three rail sections, a first rail section 11, a second rail section 12 and a third rail section 13. Between these sections is a first undercut profile 5 and a second undercut profile 6. The first rail section 11 has on its left side an first flange 3 and the third rail section has on it left side an second flange 7. The first and the third rail section 11, 13 together with its respective first and second undercut profile 5, 6 and its first and second flange 3, 7 create the space, with which the floor section interacts. In the first and third rail section 11, 13 are also two holes 4 shown. These are used to secure the rail 2, 52 for example to a wall through screws or other fixating means.
Fig. 4b shows a slightly different profile. This profile can also be made out of a sheet metal or an extruded profile. The rail contains three rail sections, a first rail section 111, a second rail section 112 and a third rail section 113. Between these sections is a first undercut profile 105 and a second undercut profile 106. On the outer edges of the first and second under cut section 105, 106 is a profile edge 108 downwardly directed. This makes the interaction with the floor section 33 better. The first rail section 11 has on its left side a first flange 103 and the third rail section has on it left side a second flange 107.

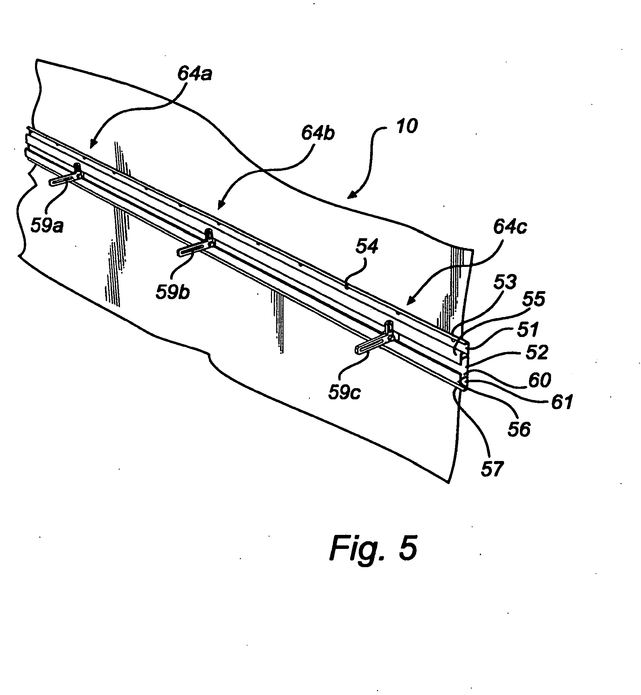

Fig. 5 shows a rail 52 which contains of three rail sections, a first rail section 51, a second rail section 60 and a third rail section 61. Between these sections is a first undercut profile 55 and a second undercut profile 56. The first rail 51 has on its upward side an first flange 53 and the third rail section 61 has on it downward side a second flange 57. Between the first undercut profile 55 and the second undercut profile 56 wall brackets are arranged 59a, 59b and 59c, for being manoeuvrable along the rail 52. At least one additional fastening zone 64b is positioned between a first 64a and a second 64c fastening zone of the side portions of the module system.

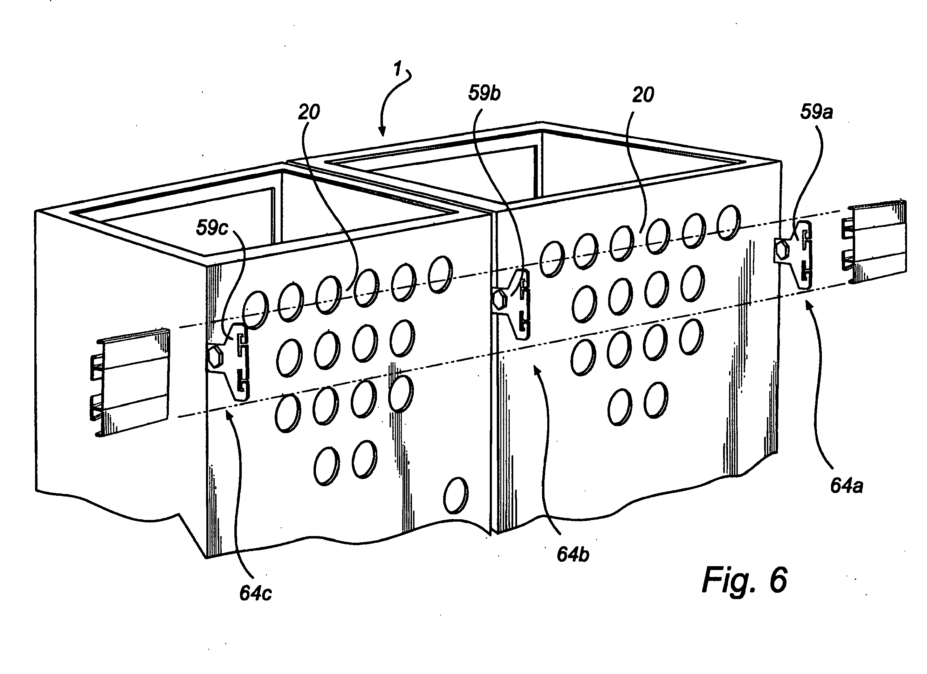

Fig 6. shows a module system with module units 20 with attached wall-brackets 59a, 59b and 59c as seen from behind. The brackets are then introduced is to the rail 52 at an open end and the module units are installed in a suitable position by fixing brackets to the floor after. As an option the units are positioned one by one against prearranged brackets in the rail 52 for accomplishing a fastening zone. The skilled person realises that there are also other ways utilizing the flexibility of the invention depending on the actual module unit to be installed.

The invention has mainly been described above with reference to a some embodiments. However, as is readily appreciated by a person skilled in the art, other embodiments than the ones disclosed above are equally possible within the scope of the invention, as defined by the appended patent claims.

## Claims

1. Load securing system, for a cargo or a back space in an automotive vehicle (10), wherein at least two rails (2) are arranged so as to be fixable along said space, wherein said rails (2) are connectable to each other by a bridging element (33) arranged in a space between said rails (2), and wherein, in use of said system, each rail (2) is held by one or more fixing means (32) connected to said vehicle (10), **characterised in that** each fixing means (32), in use, is connected to the vehicle (10) through a fastener (31) located at a side of the corresponding (2) facing away from said bridging element (33).

2. Load securing system according to claim 1, wherein said rails (2), in use, are propagating parallel to one another along the longitudinal direction of the vehicle (10).

3. Load securing system according to any one of claims 1-2, comprising at least one module system (1), for containing for example work equipment, wherein, in use, said module system (1) is placed along the longitudinal direction of the vehicle (10) and attached to one of said rails.

4. Load securing system according to claim 3, wherein at a first side portion of the module system (1) a first fastener is arranged and at a second side portion of said module system a second fastener is arranged, said fasteners, in use, arranging the module system to the wall of the vehicle (10).

5. Load securing system according to claim 3, comprising an additional rail (52) which, in use, is positioned by said wall along the longitudinal direction of the vehicle (10) and comprises fastening zones (84) for the module system (1), said additional rail (52) being formed for variable positioning of at least three fasteners (59a, 59b. 59c) for distribution of module system loading along said rail (52).

6. Load securing system according to claim 5, wherein at least one additional fastening zone (64b) is positioned between a first (64a) and a second (64c) fastening zone of the side portions of the module system (1).

7. Load securing system according to any one of claims 1-6, wherein at least one of the rails (2) is made of metal.

8. Load securing system according to any one of claims 1-7, wherein at least one of the rails (2) has at least one undercut profile (5; 6, 55; 56, 105; 106).

9. Load securing system according to any one of claims 1-8, wherein at least one of the rails (2) has three rail sections (11, 12, 13; 51, 60, 61; 111, 112, 113).

10. Load securing system according to any one of claims 1-9, wherein at least one of the rails (2) is adapted for tongue and groove engagement with said bridging element (33) along a first groove (36).

11. Load securing system according to any one of claims 1-10, wherein at least one of the rails (2) is adapted for tongue and groove engagement with said bridging element (33) along a first (36) and a second groove (37).

12. Load securing system according to any one of claims 1-11, wherein the bridging element (33) is a floor section.

13. Load securing system according to any one of claims 1-11, wherein a plurality of floor elements forms the bridging element (33).

14. Load securing system according to any one of claims 1-13, wherein the upper side of the bridging element (33) and the upper side (5, 6) of at least one of the rails are levelled once mounted.

15. Load securing system according to any one of claims 1-14, wherein the bridging element (33) is made of wood or composite material.

16. Load securing system according to any one of claims 1-15, wherein the bridging element (33) is provided with a mat on the upper side.

17. Method of installing a load securing system in service vehicles comprising the steps of:
connecting a bridging element (33) with two rails (2) at two opposite sides of said bridging element (33),
placing said bridging element (33) and said rails (2) on a cargo space floor of said vehicle, and
arranging said rails (2) through fasteners (31) to the vehicle at a side of each rail (2) facing away from said bridging element (33), thereby fixing said load securing system in the service vehicle (10).

18. Method according to claim 17, in which additionally, floor levelling sections (34) are positioned on vehicle floor spaces in the cargo space, in order to achieve a levelled surface.

19. Method according to any one of claims 17-18, in which additionally, a module system (1) is positioned anchored to one of said rails (2).

20. Method according to any one of claims 17-19, in which additionally, a module system (1) is fixed to an additional rail (52) previously mounted on the wall of the service vehicle (10).

## Patentansprüche

1. Lastsicherungssystem für einen Fracht- oder Rückraum in einem Kraftfahrzeug (10), wobei zumindest zwei Schienen (2) derart angeordnet sind, dass sie diesen Raum entlang befestigbar sind, wobei die Schienen (2) durch ein Brückenelement (33) miteinander verbindbar sind, das in einem Raum zwischen den Schienen (2) angeordnet ist, und wobei im Gebrauch des Systems jede Schiene (2) durch ein oder mehr Befestigungsmittel (32) gehalten ist, das mit dem Fahrzeug (10) verbunden ist, **dadurch gekennzeichnet, dass** jedes Befestigungsmittel (32) im Gebrauch über ein Befestigungselement (31) mit dem Fahrzeug (10) verbunden ist, das sich an einer Seite der entsprechenden Schiene (2) von dem Brückenelement (33) weggekehrt befindet.

2. Lastsicherungssystem nach Anspruch 1, wobei die Schienen (2) im Gebrauch parallel zueinander entlang der Längsrichtung des Fahrzeugs (10) verlaufen.

3. Lastsicherungssystem nach einem der Ansprüche 1 oder 2, umfassend zumindest ein Modulsystem (1) zum Enthalten von beispielsweise Werkzeugausrüstung, wobei im Gebrauch das Modulsystem (1) entlang der Längsrichtung des Fahrzeugs (10) angeordnet und an einer der Schienen angebracht ist.

4. Lastsicherungssystem nach Anspruch 3, wobei an einem ersten Seitenabschnitt des Modulsystems (1) ein erstes Befestigungselement angeordnet ist und an einem zweiten Seitenabschnitt des Modulsystems ein zweites Befestigungselement angeordnet ist, wobei die Befestigungselemente im Gebrauch das Modulsystem an der Wand des Fahrzeugs (10) anordnen.

5. Lastsicherungssystem nach Anspruch 3, umfassend eine zusätzliche Schiene (52), die im Gebrauch durch die Wand entlang der Längsrichtung des Fahrzeugs (10) positioniert ist und Befestigungsbereiche (64) für das Modulsystem (1) umfasst, wobei die zusätzliche Schine (52) zum variablen Positionieren von zumindest drei Befestigungselementen (59a, 59b, 59c) zur Verteilung von Modulsystemladung entlang der Schiene (52) ausgebildet ist.

6. Lastsicherungssystem nach Anspruch 5, wobei zumindest ein zusätzlicher Befestigungsbereich (64b) zwischen einem ersten (64a) und zweiten (64c) Befestigungsbereich der Seitenabschnitte des Modulsystems (1) positioniert ist.

7. Lastsicherungssystem nach einem der Ansprüche 1 bis 6, wobei zumindest eine der Schienen (2) aus Metall hergestellt ist.

8. Lastsicherungssystem nach einem der Ansprüche 1 bis 7, wobei zumindest eine der Schienen (2) zumindest ein unterschnittenes Profil (5; 6; 55; 56; 105; 106) aufweist.

9. Lastsicherungssystem nach einem der Ansprüche 1 bis 8, wobei zumindest eine der Schienen (2) drei Schienenteilabschnitte (11, 12, 13; 51, 60, 61; 11, 112, 113) aufweist.

10. Lastsicherungssystem nach einem der Ansprüche 1 bis 9, wobei zumindest eine der Schienen (2) zum Nut- und Federeingiff mit dem Brückenelement (33) entlang einer ersten Nut (36) geeignet ist.

11. Lastsicherungssystem nach einem der Ansprüche 1 bis 10, wobei zumindest eine der Schienen (2) zum Nut- und Federeingiff mit dem Brückenelement (33) entlang einer ersten (36) und einer zweiten Nut (37) geeignet ist.

12. Lastsicherungssystem nach einem der Ansprüche 1 bis 11, wobei das Brückenelement (33) ein Bodenteilabschnitt ist.

13. Lastsicherungssystem nach einem der Ansprüche 1 bis 11, wobei mehrere Bodenelemente das Brückenelement (33) ausbilden.

14. Lastsicherungssystem nach einem der Ansprüche 1 bis 13, wobei die Oberseite des Brückenelements (33) und die Oberseite (5, 6) von zumindest einer der Schienen nach der Anbringung abgeglichen sind.

15. Lastsicherungssystem nach einem der Ansprüche 1 bis 14, wobei das Brückenelement (33) aus Holz oder Verbundmaterial hergestellt ist.

16. Lastsicherungssystem nach einem der Ansprüche 1 bis 15, wobei das Brückenelement (33) mit einer Matte auf der Oberseite versehen ist.

17. Verfahren zum Einrichten eines Lastsicherungssystems in Service-Fahrzeugen, folgende Schritte umfassend:
Verbinden eines Brückenelements (33) mit zwei Schienen (2) an zwei gegenüberliegenden Seiten des Brückenelements (33);
Anordnen des Brückenelements (33) und der Schienen (2) auf einem Frachtraumboden des Fahrzeugs; und
Anordnen der Schienen (2) über Befestigungselemente (31) an dem Fahrzeug auf einer Seite jeder Schiene (2), die von dem Brückenelement (33) weggekehrt ist, wodurch das Lastsicherungssystem in dem Service-Fahrzeug (10) befestigt wird.

18. Verfahren nach Anspruch 17, wobei zusätzlich Bodenabgleichteilabschnitte (34) auf den Fahrzeugbodenräumen in dem Frachtraum angeordnet werden, um eine abgeglichene Oberfläche zu erzielen.

19. Verfahren nach einem der Ansprüche 17 bis 18, wobei zusätzlich ein Modulsystem (1) mit einer der Schienen (2) verankert angeordnet wird.

20. Verfahren nach einem der Ansprüche 17 bis 19, wobei zusätzlich ein Modulsystem (1) an einer zusätzlichen Schine (52) befestigt wird, die vorher an der Wand des Service-Fahrzeugs (10) angebracht wurde.

## Revendications

1. Système de sécurisation de charge, pour un véhicule de chargement ou l'espace arrière d'un véhicule automobile (10), dans lequel au moins deux rails (2) sont agencés de manière à pouvoir être fixés le long dudit espace, dans lequel lesdits rails (2) peuvent être reliés l'un à l'autre par un élément faisant pont (33) agencé dans un espace entre lesdits rails (2) et dans lequel, lorsque ledit système est utilisé, chaque rail (2) est maintenu par un ou plusieurs moyen(s) de fixation (32) relié(s) audit véhicule (10), **caractérisé en ce que** chacun des moyens de fixation (32) est relié en utilisation au véhicule (10), par une fixation (31) située sur un côté du rail (2) correspondant s'éloignant dudit élément faisant pont (33).

2. Système de sécurisation de charge selon la revendication 1, dans lequel lesdits rails (2) s'étendent, en utilisation, parallèlement l'un à l'autre le long de la direction longitudinale du véhicule (10).

3. Système de sécurisation de charge selon la revendication 1 ou 2, comprenant au moins un système de modules (1) pour contenir par exemple un équipement de travail, dans lequel, en utilisation, ledit système de modules (1) est agencé le long de la direction longitudinale du véhicule (10) et fixé à l'un desdits rails.

4. Système de sécurisation de charge selon la revendication 3, dans lequel une première fixation est agencée sur une première partie latérale du système de modules (1) et une seconde fixation est agencée sur une deuxième partie latérale dudit système de modules, lesdites fixations, en utilisation, agenceant le système de modules sur la paroi du véhicule (10).

5. Système de sécurisation de charge selon la revendication 3, comprenant un rail supplémentaire (52) qui, en utilisation, est positionné par ladite paroi le long de la direction longitudinale du véhicule (10) et comprend des zones de fixation (64) pour le système de modules (1), ledit rail supplémentaire (52) étant formé pour un positionnement variable d'au moins trois fixations (59a, 59b, 59c) pour distribuer la charge du système de modules le long dudit rail (52).

6. Système de sécurisation de charge selon la revendication 5, dans lequel au moins une zone de fixation supplémentaire (64b) est placée entre une première (64a) et une deuxième (64c) zone de fixation des parties latérales du système de modules (1).

7. Système de sécurisation de charge l'une quelconque des revendications 1 à 6, dans lequel au moins un des rails (2) est en métal.

8. Système de sécurisation de charge l'une quelconque des revendications 1 à 7, dans lequel au moins un des rails (2) présente au moins un profilé en dépression (5; 6, 55; 56, 105; 106).

9. Système de sécurisation de charge l'une quelconque des revendications 1 à 8, dans lequel au moins un des rails (2) présente trois sections de rail (11, 12, 13; 51, 60, 61; 111, 112, 113).

10. Système de sécurisation de charge l'une quelconque des revendications 1 à 9, dans lequel au moins un des rails (2) est adapté pour un engagement de languette et de rainure avec ledit élément faisant pont (33) le long d'une première rainure (36).

11. Système de sécurisation de charge l'une quelconque des revendications 1 à 10, dans lequel au moins un des rails (2) est adapté pour un engagement de languette et de rainure avec ledit élément faisant pont (33) le long d'une première rainure (36) et d'une deuxième rainure (37).

12. Système de sécurisation de charge l'une quelconque des revendications 1 à 11, dans lequel l'élément faisant pont (33) est une section de sol.

13. Système de sécurisation de charge l'une quelconque des revendications 1 à 11, dans lequel une pluralité d'éléments de sol forme l'élément faisant pont (33).

14. Système de sécurisation de charge l'une quelconque des revendications 1 à 13, dans lequel le côté supérieur de l'élément faisant pont (33) et le côté supérieur (5, 6) d'au moins un des rails sont à niveau une fois montés.

15. Système de sécurisation de charge l'une quelconque des revendications 1 à 14, dans lequel l'élément faisant pont (33) est en bois ou en matériau composite.

16. Système de sécurisation de charge l'une quelconque des revendications 1 à 15, dans lequel l'élément faisant pont (33) est muni d'un tapis sur le côté supérieur.

17. Procédé d'installation d'un système de sécurisation de charge dans des véhicules de service comprenant les étapes de:
relier un élément faisant pont (33) avec deux rails (2) sur deux côtés opposés dudit élément faisant pont (33),
placer ledit élément faisant pont (33) et lesdits rails (2) sur un sol d'espace de chargement dudit véhicule, et
l'agencement desdits rails (2) par des fixations (31) sur le véhicule sur un côté de chaque rail (2) s'éloignant dudit élément faisant pont (33), fixant ainsi le système de sécurisation de charge dans le véhicule de service (10).

18. Procédé selon la revendication 17, dans lequel, en plus, des sections de mise à niveau de sol (34) sont placées sur les espaces au sol du véhicule dans l'espace de chargement, afin d'obtenir une surface à niveau.

19. Procédé selon l'une quelconque des revendications 17 et 18, dans lequel, en plus, un système de modules (1) est placé en étant ancré à l'un desdits rails (2).

20. Procédé selon l'une quelconque des revendications 17-19, dans lequel, en plus, un système de modules (1) est fixé à un rail supplémentaire (52) monté au préalable sur la paroi du véhicule de service (10).
